# EUROPÄISCHE PATENTANMELDUNG

(11) **EP 1 287 734 A2**
(43) Veröffentlichungstag der Anmeldung: **05.03.2003**
(21) Anmeldenummer: 02018674.8
(22) Anmeldetag: 21.08.2002
(51) Int. Cl.: A01G 9/02

(54) **Gross-Pflanzgefäss für Gabäudefassaden**

(30) Priorität: 24.08.2001 DE 10141562
(71) Anmelder: Kessler, Martin, 58452 Witten (DE)
(72) Erfinder: Kessler, Martin, 58452 Witten (DE)
(74) Vertreter: Wanischeck-Bergmann, Axel

(57) **Zusammenfassung**

Die Erfindung betrifft ein Gefäß zur Befestigung an ebenen und im wesentlichen lotrecht ausgerichteten Flächen, insbesondere an Gebäudefassaden, welches mit zur Aufzucht und/oder Kultivierung von Pflanzen geeigneten Schüttgütern befüllbar ist und eine Rückwand, zwei Seitenwände und eine Vorderwand aufweist, wobei die Seitenwände endseitig an der Rückwand und der Vorderwand befestigt sind und zwischen der Rückwand und der Vorderwand eine Befüll- und Entnahmeöffnung angeordnet ist. Um ein Gefäß zu entwickeln, das die Anlage von Kleinstgärten an insbesondere lotrechten Flächen ohne Nachteile für Fassade oder Gebäude ermöglicht, wobei eine ganzjährige Begrünung möglich sein soll, ist vorgesehen, dass die Seitenwände (5) zwei geradlinig begrenzte Kanten (8) und eine zumindest annähernd kreisbogenabschnittförmig begrenzte, die beiden geradlinig begrenzten Kanten (8) verbindende dritte Kante (9) aufweist, wobei eine der geradlinig begrenzten Kanten (8) jeder Seitenwand (5) mit der Rückwand (4) und die zumindest annähernd kreisbogenabschnittförmig begrenzte Kante (9) jeder Seitenwand (5) mit der Vorderwand (6) verbunden ist.

## Beschreibung

Die Erfindung betrifft ein Gefäß zur Befestigung an ebenen und im wesentlichen lotrecht ausgerichteten Flächen, insbesondere an Gebäudefassaden, welches mit zur Aufzucht und/oder Kultivierung von Pflanzen geeigneten Schüttgütern befüllbar ist und eine Rückwand, zwei Seitenwände und eine Vorderwand aufweist, wobei die Seitenwände endseitig an der Rückwand und der Vorderwand befestigt sind und zwischen der Rückwand und der Vorderwand eine Befüll- und Entnahmeöffnung angeordnet ist.

Gattungsgemäße Gefäße zur Aufnahme von Wasser, Erde und Pflanzen mit Wurzelwerk sind aus dem Stand der Technik in vielfältiger Ausgestaltung bekannt. Beispielsweise sind Pflanztröge und -kübel bekannt, die sowohl im Innen- als auch im Außenbereich von Gebäuden aufgestellt werden. Hängende Anordnungen von Pflanzkübel, sogenannte Blumenampeln sind ebenfalls bekannt, bedürfen aber eines sehr großen Freiraums und sind hinsichtlich ihrer Größe durch die Befestigungselemente, beispielsweise Schraubhaken sehr begrenzt.

Im Bereich von Gebäudefassaden sind sogenannte Blumenkästen bekannt, die für Blumen und Kräutern, nicht aber für höhere Vegetationen geeignet sind. Die Anordnung der Blumenkästen erfolgt im Bereich von Balkon- oder Terrassenbrüstungen oder an Fensteranlagen, wobei s-förmig ausgebildete Profilelemente als Haltevorrichtungen verwendet werden. Neben der begrenzten Größe dieser Blumenkästen ist es von Nachteil, dass immergrüne Pflanzen in diesen Blumenkästen nicht gedeihen, so dass Blumenkästen nur über einen kurzen Zeitraum eines Jahres verwendbar sind.

Insbesondere in städtischen Räumen ist es wichtig, Lebensraum für Pflanzen zu erschließen, wozu sich Fassaden besonders anbieten. Pflanzen verbessern dort die Luft durch Sauerstofferzeugung (2 m² Efeu erzeugen genug für einen Menschen), sie filtern Staub und Schadstoffe aus, regulieren das Klima durch Luftbefeuchtung und Schattenwirkung, schlucken Schall, haben wichtige ökologische Funktionen und tragen wesentlich zur Verschönerung des menschlichen Lebensraumes und dem damit verbundenen Wohlbefinden bei. Wünschenswert ist gegebenenfalls auch das Ziehen von Nutzpflanzen (Kräuter, Obst etc.). Die voranstehend genannten Gefäße sind hierzu nur bedingt geeignet, da sie entweder auf eine Aufstellfläche angewiesen und bei Montage mit Profilelementen aufgrund ihres Gewichtes nur relativ klein ausgebildet sein können.

Keines der bekannten Pflanzgefäße bietet eine zufriedenstellende Möglichkeit, an einer Fassade bzw. an lotrechten Flächen Kleinstgärten anzulegen und nahezu allen Arten von Pflanzen ausreichenden Lebensraum zu bieten. Hierbei ist auch zu beachten, dass Verschmutzung der Fassade durch verunreinigtes Wasser zu vermeiden sind und ein ausreichender Lichteinfall in in der Fassade angeordnete Fenster gewährleistet sein muss.

Dieser Erfindung liegt die **Aufgabe** zugrunde, ein Gefäß zu entwickeln, das die Anlage von Kleinstgärten an insbesondere lotrechten Flächen ohne Nachteile für Fassade oder Gebäude ermöglicht wobei eine ganzjährig Begrünung möglich sein soll.

Die **Lösung** dieser Aufgabenstellung sieht bei einem gattungsgemäßen Gefäß vor, dass die Seitenwände zwei geradlinig begrenzte Kanten und eine zumindest annähernd kreisbogenabschnittförmig begrenzte, die beiden geradlinig begrenzten Kanten verbindende dritte Kante aufweist, wobei eine der geradlinig begrenzten Kanten jeder Seitenwand mit der Rückwand und die zumindest annähernd kreisbogenabschnittförmig begrenzte Kante jeder Seitenwand mit der Vorderwand verbunden ist.

Durch die erfindungsgemäße Ausgestaltung des Gefäßes wird die Lage des Schwerpunktes in den Bereich der Fassade angeordnet, so dass eine Befestigung des Gefäßes an der Fassade auch dann möglich ist, wenn das Gefäß mit dem Schüttgut, beispielsweise Mutterboden und größeren Pflanzen befüllt ist. Durch die kreisbogenabschnittförmig ausgebildete Vorderwand wird nämlich sichergestellt, dass das Schüttgut im Bereich der fassadenseitigen Rückwand eine größere Tiefe aufweist, als im Bereich der Vorderwand. Demzufolge werden auch höhere Pflanzen im Bereich dieser größeren Pflanztiefe gepflanzt, um dem Wurzelwerk eine größere Wurzeltiefe zu ermöglichen.

Gleichzeitig bietet die kreisbogenabschnittförmige Ausgestaltung der Vorderwand die Möglichkeit, den Lichteinfall in unterhalb des Gefäßes angeordneten Fenstern möglichst unbeeinflusst zu lassen. Nur in sehr wenigen Ausnahmefällen wird das Gefäß zu einem Schattenspender für diese Fenster wirken.

Somit wird ein Gefäß für Kleinstgärten im Fassadenbereich geschaffen, bei dem trotz einer relativ großen Ausladung an seiner der Bepflanzung offenstehenden Oberseite und einer ausreichenden Tiefe im Bereich der Fassade, die Vorteile einer statisch einfachen Befestigung im Fassadenbereich und gleichzeitig einer relativ geringen Beeinflussung des Lichteinfalls gegeben sind.

Im Querschnitt verläuft die Vorderwand des Gefäßes nach unten auf die Fassade zu, d.h. die Pflanztiefe vergrößert sich zur Fassade hin. Dieser Querschnitt bietet den statischen Vorteil, dass der Schwerpunkt des Gefäßes zur Fassade verschoben wird und damit Zugkräfte auf die Befestigungselemente bzw. Fassade reduziert werden. Besonders vorteilhaft ist dieser Querschnitt, um den Sonnenlichteinfall (in Ländern mit nicht senkrechter Sonneneinstrahlung) auf unterhalb des Pflanzgefäßes liegende Flächen nicht oder nur in geringem Umfang zu reduzieren. Ein weiterer wichtiger Vorteil dieses Querschnitts ist, dass im Winter gefrierendes Wasser das Pflanzgefäß nicht beschädigen kann, da aufgrund des Öffnungswinkels Eis nach oben ausweichen kann, ohne Druck auf die Gefäßwände aufzubauen.

Die Anbringung des Gefäßes kann an jeder Stelle der Fassade erfolgen. Bei einer Anbringung des Gefäßes in geringer Höhe bietet der Verlauf der Vorderwand den Vorteil, dass unterhalb des Gefäßes liegende horizontale Flächen zugänglich und teilweise nutzbar bleiben, etwa als Parkraum oder teilüberdachte Abstellplätze.

Die Anbringung des Gefäßes unterhalb von Fenstern bringt besondere Vorteile, weil Pflege und Nutzung des Kleinstgartens im Gefäß weitestgehend vom Gebäudeinneren aus vorgenommen werden können. Dort angebracht erfüllt der im Gefäß angeordnete Kleinstgarten seine ästhetischen Funktion auch von innen. Der Blick aus dem Fenster verbindet sich mit einem Blick auf die Bepflanzung also "ins Grüne". Dabei können im Pflanzgefäß problemlos weitere Gestaltungselemente integriert werden, etwa Vogelhäuschen, Beleuchtung, Wassergefäße und -spiele, Skulpturen, Windspiele etc.

Gegebenenfalls kann der Kleinstgarten im Gefäß an der Fensteraußenseite bei Verwendung höherer Pflanzen, wie Sträucher und Bäume genutzt werden, um unerwünschte Einblickmöglichkeiten ins Gebäudeinnere zu verhindern.

Zimmerpflanzen an der Fensterinnenseite können zu einem harmonischen Ganzen hinzugefügt werden. Da Zimmerpflanzen den Lichteinfall reduzieren, kann der außen im Gefäß angeordnete Kleinstgarten Zimmerpflanzen auch ersetzen.

In vielen Fällen sind im Gebäudeinneren unterhalb der Fenster Heizkörper angebracht und die Wandstärken der Fassade wurden dort verringert. Insbesondere hier bietet das Gefäß eine effiziente zusätzliche Wärmedämmung für das Gebäude. Umgekehrt ist die Abwärme der Fassade vorteilhaft für den Pflanzenschutz, weil die Abwärme der Fassade hilft, Frost im Gefäß zu vermeiden. Alle Seiten des Gefäßes können mit einer Wärmedämmung versehen oder wärmedämmend ausgebildet sein. Beispielsweise kann die der Fassade zugewandte Rückwand eine Wärmedämmplatte aufweisen, die vorzugsweise aus Mineralfasern oder aus Hartschaum, wie Polystyrol besteht und den Raum zwischen der Rückwand und der Fassade ausfüllt.

Das Gefäß eignet sich als Kleinstgarten, weil es aufgrund seiner Bauweise nahezu allen Pflanzen ausreichenden Lebensraum bietet. Das Gefäß ist Ausgangspunkt für weitreichende Fassadenbegrünungen mit Kletterpflanzen wie Efeu, Weine etc. Hängepflanzen können das Gefäß bedecken und optisch aufwerten. Kleinere Bäume und Sträucher können fassadenseitig besonders tief wurzeln. Insbesondere in Fensternähe sind Kräuter und ähnliche Nutzpflanzen gut erreichbar.

Das Gefäß besteht aus möglichst leichten, tragfesten und wetterbeständigen Materialien, wie korrosionsbeständigem Metall oder Leichtmetall, wie Edelstahl oder Aluminium oder zähharten, insbesondere UV-beständigen Kunststoffen. Derartige Materialien zeichnen sich insbesondere durch Langlebigkeit und problemlose Recyclebarkeit aus. Daher kommen als Basismaterial Stahl- und Aluminiumbleche in Frage, aber auch sonstige Metalle, Kunststoffe, Leichtbeton, Holz, Stein, Keramik, Glas oder Kombinationen aus den genannten Materialien, was je nach Material auch der Verbesserung der Wärmedämmung dient.

Nach einem weiteren Merkmal der Erfindung ist vorgesehen, dass im Gefäß eine oder mehrere wasserdichte Kammern übereinander angeordnet sind, wobei jede Kammer in ihrem Inneren für einen bestimmten Wasserspiegel sorgt. Hiermit wird gewährleistet, dass Pflanzen in allen Bereichen des Gefäßes über einen hinreichenden Wasservorrat verfügen können.

Grundsätzlich ist das Gefäß wasserdicht ausgebildet. Ergänzend kann vorgesehen sein, dass bei entsprechend großen, insbesondere hohen Kammern in Teilbereichen Wasserpflanzen und -lebewesen anpflanzbar bzw. pflegbar sind.

Eine weitere Kammer legt den Grundwasserspiegel im gesamten Gefäß fest und klärt überschüssiges Wasser. Diese Kammer ist gegenüber dem Gefäß wasserdicht angeordnet und legt eine den Grundwasserspiegel bestimmende Höhe fest. Überschüssiges Wasser kann in das Innere der Kammer gelangen. In der Kammer ist ein Filtermedium angeordnet, durch das das überschüssige Wasser fließt und gereinigt wird. Nach dem Durchfließen des Filtermediums wird das überschüssige Wasser aus dem Gefäß abgeführt, beispielsweise einem Fallsohr zugeführt, um in die Kanalisation zu gelangen. Als Filtermedium findet insbesondere Sand und/oder Aktivkohle nach dem Vorbild der Natur Anwendung.

Vorzugsweise ist innerhalb der Kammer eine weitere Kammer derart angeordnet, dass das Filtermedium, insbesondere der Sand zurückgehalten wird, während bei Erreichen eines gewissen Wasserstandes im Gefäß geklärtes überschüssiges Wasser in eine Auslaufkammer gelangen kann, von wo aus dieses überschüssige Wasser abgeleitet wird, ohne die Fassade zu beschädigen oder zu beschmutzen.

Die Rückwand des Gefäßes weist am oberen Ende eine Dichtkante auf, die sich über die gesamte Länge des Gefäßes erstreckt und einen Spalt zwischen der Rückwand und der Fassade dichtend abdeckt. Hierdurch wird vermieden, dass Wasser zwischen Rückwand und Fassade gelangt und fassadenseitig Feuchtigkeitsschäden verursacht.

Die Befestigung des Gefäßes an der Fassade erfolgt in der Regel durch eine Zweipunktbefestigung. Hierzu ist jeweils im oberen Teil der Rückwand nahe einer Seitenwand eine Öffnung zur Aufnahme von beispielsweise Haken, Schrauben, Haltestangen oder dergleichen vorgesehen. Ergänzend können im Bereich der Öffnungen Distanzelemente vorgesehen sein, die die Rückwand auf Distanz zur Fassade halten und fehlerhaften Montagen vermeiden.

Um statischen Aufforderungen im Einzelfall gerecht zu werden, kann das Gefäß an relativ langen, insbesondere lotrecht an der Fassade befestigten Profilen (Flacheisen / Designprofile) befestigt werden. Mit diesem Zubehör können Zugkräfte minimiert und Scherkräfte an geeigneten Stellen eingeleitet werden. Ferner bietet diese Ausführung die Möglichkeit, zwischen den Profilen und dem Gefäß eine Kupplung, beispielsweise in Form von Haken am Gefäß und Bohrung im Profil auszubilden, so dass das Gefäß schnell montiert aber auch schnell demontierbar ist, um beispielsweise Instandsetzungen, insbesondere Malerarbeiten an den Fassaden durchführen zu können.

Bei der voranstehend beschriebenen Zweipunktbefestigung wirken vor allem Zug- und Scherkräfte auf die Befestigungselemente bzw. die Fassade. Als Befestigungselemente kommen daher eine Vielzahl von jeweils geeigneten und bauaufsichtlich zugelassenen Befestigungsmaterialien in Frage, wie zum Beispiel Anker und Klebedübel. Entsprechende Befestigungselemente können auch zur Befestigung der Profile vorgesehen sein.

Das Gefäß kann in annähernd beliebiger Breite gefertigt werden. Bei großen Breiten sind gegebenenfalls zusätzliche Befestigungselemente vorzusehen. Eine Standardisierung der Breite bietet wirtschaftliche Vorteile, dabei können Modulsysteme entstehen und Pflanzgefäße an der Fassade unterschiedlich arrangiert werden.

Neben einem kreisbogenabschnittförmigen Verlauf der Vorderwand kann auch ein polygonaler Verlauf vorgesehen sein, um die voranstehend beschriebenen Vorteile zu erreichen. Bei einem polygonalem Verlauf der Vorderwand besteht diese aus einzelnen Streifen, die in Form von Planken zu einer Fläche zusammengesetzt und endseitig mit den Seitenwänden verbunden sind. Alternativ kann die Vorderwand auch einstückig ausgebildet und entsprechend dem Kantenverlauf der Seitenwände abgekantet sein.

Weitere Merkmale und Vorteile der Erfindung ergeben sich aus den Unteransprüchen sowie aus der nachfolgenden Beschreibung der zugehörigen Zeichnung, in der eine bevorzugte Ausführungsform eines Gefäßes dargestellt ist. In der Zeichnung zeigen:
- Figur 1: ein Gefäß in perspektivischer Ansicht;
- Figur 2: das Gefäß gemäß Figur 1 in Seitenansicht;
- Figur 3: das Gefäß gemäß den Figuren 1 und 2 mit einer Wasserbevorratungseinrichtung in geschnitten dargestellter Seitenansicht;
- Figur 4: das Gefäß gemäß den Figuren 1 und 2 mit einer Entwässerungsvorrichtung in geschnitten dargestellter Seitenansicht;
- Figur 5: das Gefäß gemäß den Figuren 1 und 2 mit einer alternativen Ausführungsform einer Entwässerungsvorrichtung in geschnitten dargestellter Seitenansicht;
- Figur 6: das Gefäß gemäß den Figuren 1 bis 5 mit einer ersten Querschnittsform in Seitenansicht;
- Figur 7: das Gefäß gemäß den Figuren 1 bis 5 mit einer zweiten Querschnittsform in Seitenansicht;
- Figur 8: das Gefäß gemäß den Figuren 1 bis 5 mit einer dritten Querschnittsform in Seitenansicht;
- Figur 9: das Gefäß gemäß den Figuren 1 bis 5 mit einer vierten Querschnittsform in Seitenansicht;
- Figur 10: eine erste Ausführungsform einer Befestigung des Gefäßes nach den Figuren 1 bis 9 in Seitenansicht und
- Figur 11: eine zweite Ausführungsform einer Befestigung des Gefäßes nach den Figuren 1 bis 9 in Seitenansicht.

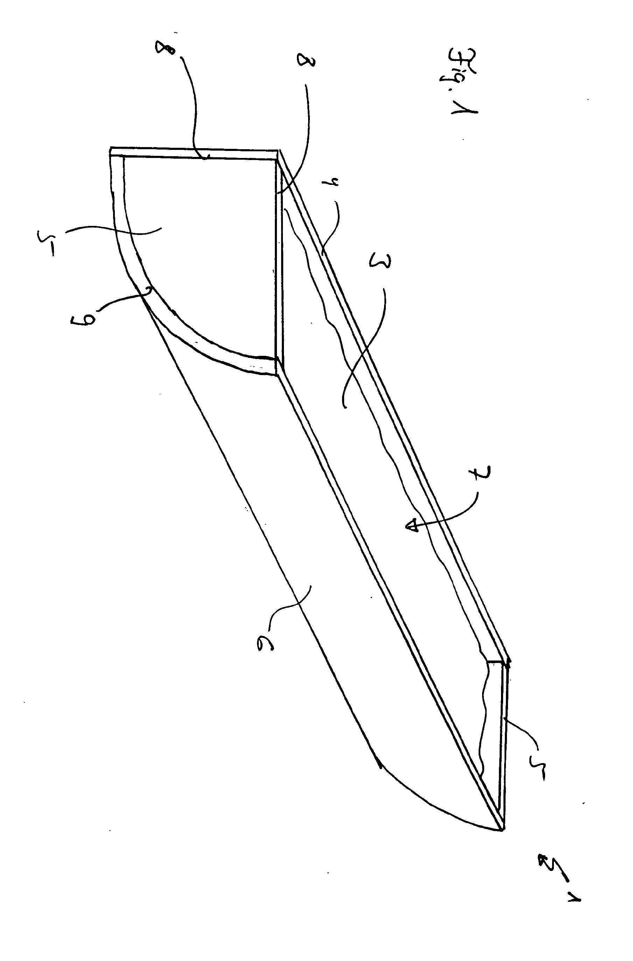

Ein in den Figuren 1 bis 11 dargestelltes Gefäß 1 zur Befestigung an einer Gebäudefassade 2 (Figuren 10 und 11) dient der Aufzucht und/oder Kultivierung von Pflanzen und ist mit Schüttgütern 3 beispielsweise Mutterboden und/oder sonstigen, der Aufzucht und/oder Kultivierung von Pflanzen dienenden Schüttgütern 3 befüllbar. Das Gefäß 1 weist eine Rückwand 4, zwei Seitenwände 5 und eine Vorderwand 6 auf, wobei die Seitenwände 5 endseitig an der Rückwand 4 und der Vorderwand 6 befestigt sind und zwischen der Rückwand 4 und der Vorderwand 6 eine Befüll- und Entnahmeöffnung 7 angeordnet ist. Die Seitenwände 5 haben zwei geradlinig begrenzte Kanten 8 und eine kreisbogenabschnittförmig begrenzte, die beiden geradlinig begrenzten Kanten 8 verbindende dritte Kante 9, wobei eine der geradlinig begrenzten Kanten 8 jeder Seitenwand 5 mit der Rückwand 4 und die kreisbogenabschnittförmig begrenzte Kante 9 jeder Seitenwand 5 mit der Vorderwand 6 verbunden ist. Rückwand 4, Seitenwände 5 und Vorderwand 6 bestehen aus einem korrosionsbeständigen Edelstahl und sind an ihren Kontaktbereichen miteinander verschweißt.

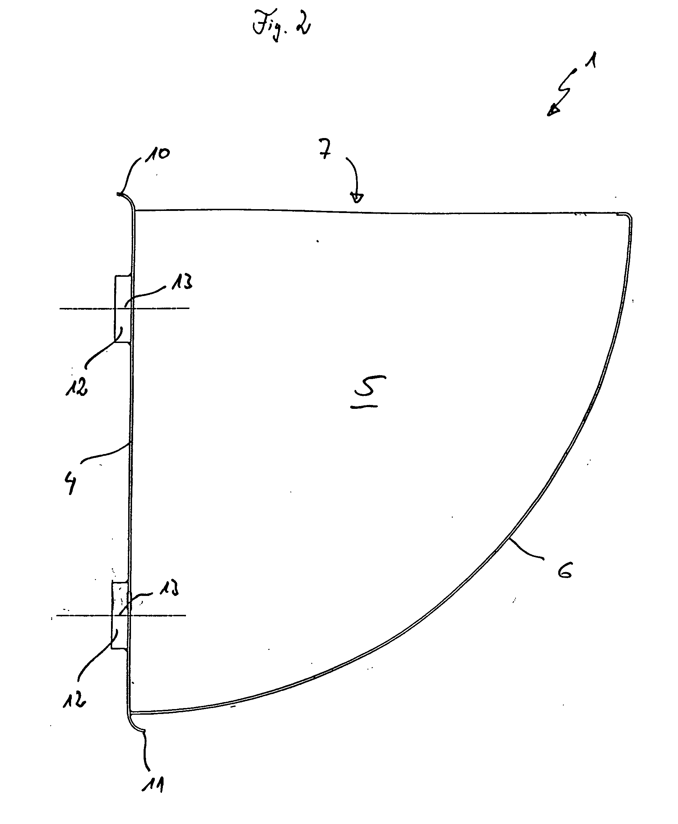

Gemäß Figur 2 weist die Rückwand 4 an ihrem oberen, im Bereich der Befüll- und Entnahmeöffnung 7 angeordneten Ende eine Dichtkante 10 auf, die sich über die gesamte Länge der Rückwand 4 erstreckt. Am gegenüberliegenden Ende der Rückwand 4 ist eine Tropfkante 11 angeordnet, die sich ebenfalls über die gesamte Länge der Rückwand 4 erstreckt. Ferner weist die Rückwand 4 außenseitig vier Distanzhalter 12 auf, von denen in der Figur 2 lediglich zwei dargestellt sind. Die Distanzhalter 12 haben eine Materialstärke, die im Wesentlichen mit der Länge der Dichtkante 10 übereinstimmt, so dass bei an einer Gebäudefassade 2 montiertem Gefäß 1 die Dichtkante 10 ein Eindringen von Wasser, beispielsweise Regenwasser oder Gießwasser in den Bereich zwischen der Gebäudefassade 2 und der Rückwand 4 vermeidet. Außenseitig entlang der Vorderwand 6 abfließendes Wasser wird von der Tropfkante 11 derart abgeleitet, dass auch dieses Wasser nicht in den Bereich der Gebäudefassade 2 gelangen kann.

In den Distanzhaltern 2 sind Bohrungen 13 zur Aufnahme von Befestigungselementen, beispielsweise Schrauben vorgesehen.

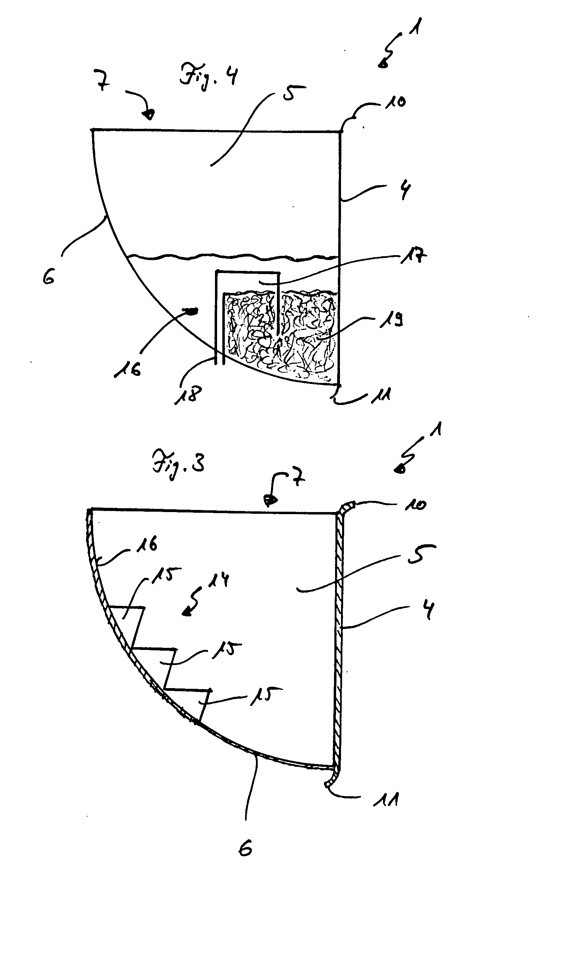

Gemäß Figur 3 kann innerhalb des Gefäßes 1 eine Wasservorratseinrichtung 14 vorgesehen sein, die im dargestellten Ausführungsbeispiel aus drei Behältern 15 besteht, die treppenartig auf der Innenfläche 16 der Vorderwand 6 angeordnet sind. Durch den treppenartigen Aufbau der Wasservorratseinrichtung 14 kann die Befüllung der Wasservorratseinrichtung 14 über den obersten Behälter 15 erfolgen, bei dem überlaufendes Wasser in die unteren Behälter 15 einläuft.

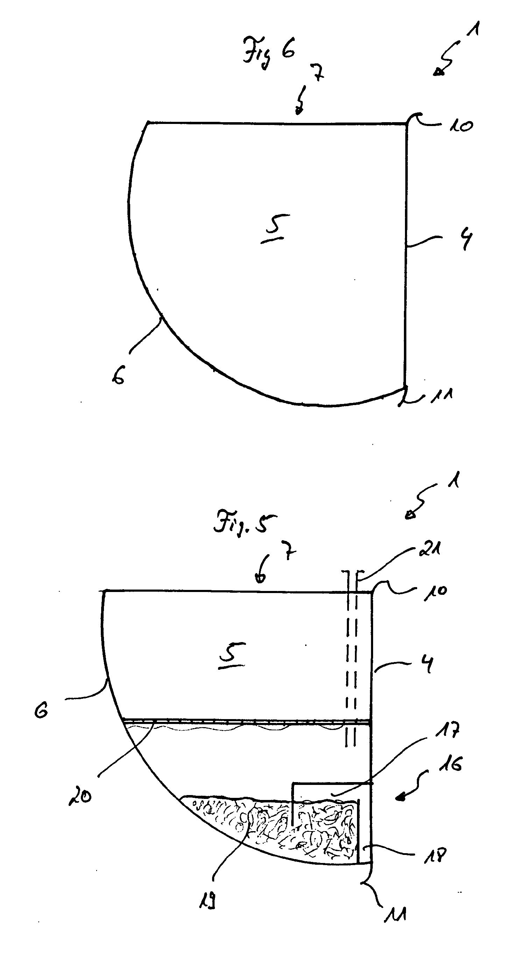

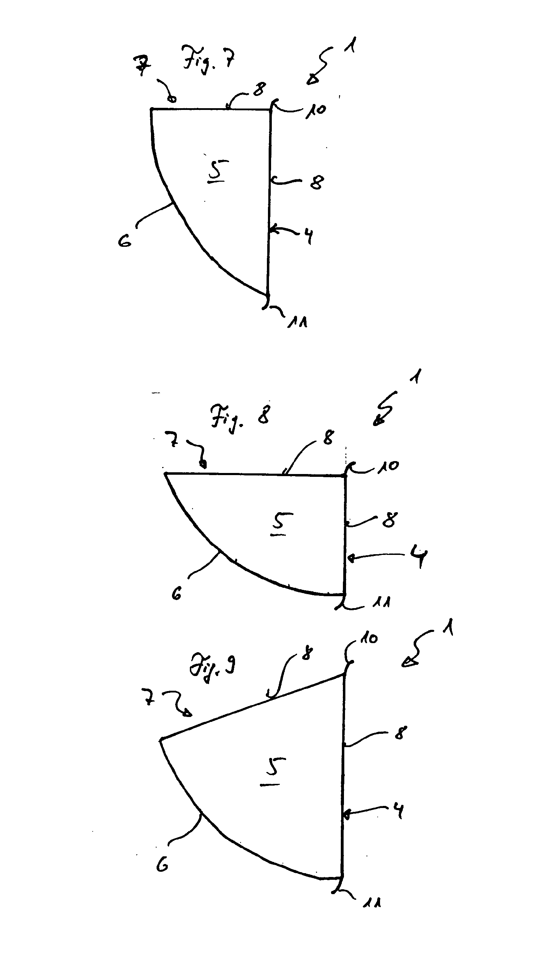

Die Figuren 4 und 5 zeigen ergänzend vorgesehene Entwässerungsvorrichtungen 16, die aus einer innerhalb des Gefäßes 1 angeordneten Kammer 17 bestehen, die einen Abfluss 18 aufweist und teilweise mit einem Filtermedium 19, beispielsweise Sand oder Aktivkohle befüllt ist, so dass über den Abfluss 18 austretendes Wasser, welches beispielsweise durch Erde verunreinigt sein kann, durch das Filtermedium fließen muß und dort gereinigt wird. Ergänzend kann beispielsweise, wie in Figur 5 dargestellt, oberhalb der Entwässerungsvorrichtung 16 ein Rost 20 angeordnet sein, auf dem das zur Aufzucht und/oder Kultivierung von Pflanzen geeignete Schüttgut 3 angeordnet ist. Über eine Bewässerungsvorrichtung 21, die gemäß Figur 5 rohrförmig ausgebildet und in einen Bereich bis unterhalb des Rostes 20 reicht, kann die erforderliche Menge Wasser, gegebenenfalls unter Zugabe von Düngemitteln in das Gefäß 1 eingefüllt werden.

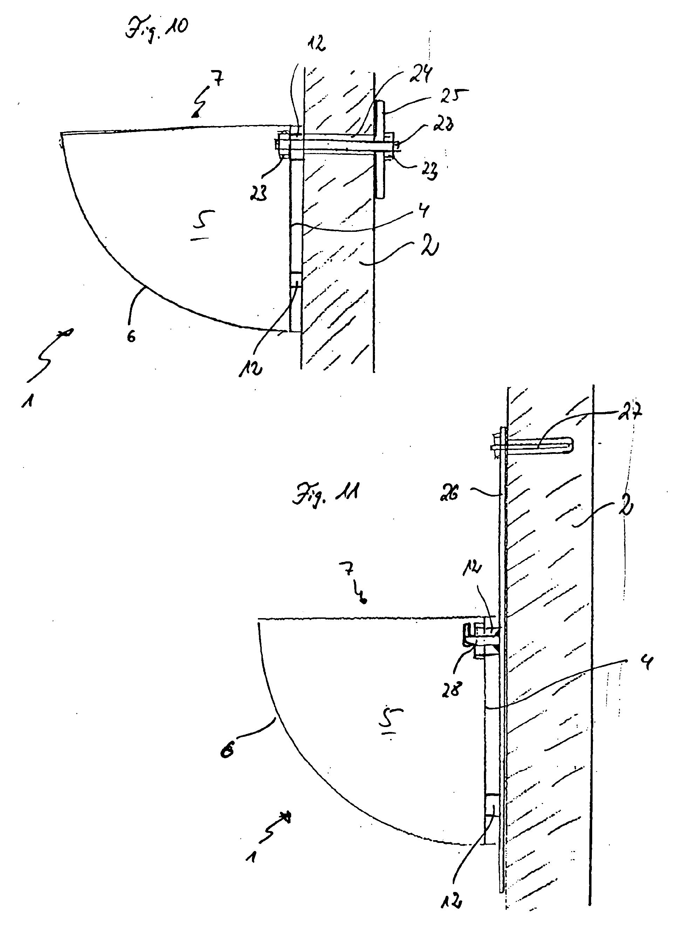

Bei den in den Figuren 1 bis 5 dargestellten Gefäßen 1 ist die Vorderwand 6 im Querschnitt viertelkreisförmig ausgebildet. Die Kanten 8 haben bei dieser Ausführungsform eine übereinstimmende Länge. In den Figuren 6 bis 9 sind hiervon abweichende Querschnittsformen des Gefäßes 1 dargestellt, wobei Figur 6 eine Querschnittsform des Gefäßes 1 zeigt, bei der die Vorderwand 6 einen Kreisbogenabschnitt von mehr als 90° umfasst. Die Querschnittsform des Gefäßes 1 nach Figur 7 zeichnet sich durch zwei unterschiedlich lange Kanten 8 aus, wobei die parallel zur Gebäudefassade 2 verlaufende, mit der Rückwand 4 verbundene Kante 8 der Seitenwände 5 länger ausgebildet ist, als die im Bereich der Befüll- und Entnahmeöffnung 7 verlaufende Kante 8.

Bei der Querschnittsform des Gefäßes 1 gemäß Figur 8 ist die parallel zur Gebäudefassade 2 verlaufende Kante 8 der Seitenwände 5 kürzer ausgebildet, als die im Bereich der Befüll- und Entnahmeöffnung 7 angeordnete Kante der Seitenwände 5. Schließlich zeigt Figur 9 eine Ausführungsform des Gefäßes 1, bei der die im Bereich der Befüll- und Entnahmeöffnung 7 angeordneten Kanten 8 der Seitenwände 5 nicht rechtwinklig zur parallel zur Gebäudefassade 2 verlaufenden Kante 8 der Seitenwände 5 ausgerichtet ist. Der Winkel zwischen den beiden Kanten 8 der Seitenwände 5 kann kleiner oder größer 90° sein.

Die Figuren 10 und 11 zeigen zwei unterschiedliche Möglichkeiten der Befestigung des Gefäßes 1 an einer Gebäudefassade 2. Gemäß Figur 10 ist das Gefäß 1 mit einer Gewindestange 22 an der Gebäudefassade 2 befestigt, wobei die Gewindestange zwei endseitig mit jeweils einer Mutter 23 versehen und eine Bohrung 24 in der Gebäudefassade 2 durchgreifend ausgebildet ist. Die Gewindestange 22 durchgreift ferner den oberen Distanzhalter 12 und ein Konterplatte 25, die gebäudeinnenseitig angeordnet ist.

Nach der alternativen Befestigung des Gefäßes 1 gemäß Figur 11 ist vorgesehen, dass auf der Gebäudefassade 2 zwei parallel verlaufende Profile 26 lotrecht verlaufend angeordnet und mit Schrauben 27 an der Gebäudefassade 2 verdübelt sind.

An den Profilen 26 sind Hakenelemente 28 befestigt, die sowohl einen Distanzhalter 12 als auch die Bohrung in der Rückwand 4 des Gefäßes 1 durchgreifen. Diese Ausgestaltung hat insbesondere den Vorteil, dass die Gefäße 1 hängend an der Fassade angeordnet und über die Kombination aus den Hakenelementen 28 und den Bohrungen in der Rückwand 4 des Gefäßes 1 in einfacher Weise von der Gebäudefassade abgenommen werden können, um beispielsweise Instandsetzungsarbeiten, wie Malerarbeiten an der Gebäudefassade 2 ausführen zu können.

Alternativ zu einem in den Figuren 1 bis 11 dargestellten konvexen, demnach nach außen gewölbten Verlauf der Vorderwand 6 kann auch ein nach innen gewölbter und demzufolge konkaver Verlauf der Vorderwand 6 vorgesehen sein. Ebenfalls denkbar ist eine im wesentlichen dreieckige Querschnittsform des Gefäßes 1, die demzufolge eine geradlinige Verbindung zwischen der außenliegenden Kante der Seitenwände 5 mit der Rückwand 4 aufweist. Wie bereits erwähnt, kann die Vorderwand 6 alternativ die Annäherung an den bogenförmigen Verlauf durch ein Vieleck bzw. alternativ als Kombination vorstehender Möglichkeiten bzw. als Freiform ausgebildet sein.

Entsprechend den Figuren 4 und 5 bestimmt die Kammer 17 im unteren Teil des Gefäßes 1 den maximalen Wasserspiegel im Gefäß 1. Überschüssiges Wasser gelangt oberhalb der Kammer17 bzw. durch einen oder mehrere Abflüsse in den Wänden der Kammer 17 in eine Filterkammer. Die Filterkammer ist so ausgebildet, dass das Filtermedium 19 in der Filterkammer verbleibt, während geklärtes Wasser das Gefäß verlassen kann.

Entsprechend Figur 3 können oberhalb der Kammer 17 weitere Behälter 15 vorgesehen sein, die verschiedene weitere Wasserspiegel aufweisen. Dabei können diese Behälter 15 an der Vorderwand 6 und/oder an der Rückwand 4 angeordnet sein. In allen Fällen sind diese Behälter 15 so ausgebildet, dass Überschusswasser jeweils den darunter liegenden Behälter 15 füllt.

## Patentansprüche

1. Gefäß zur Befestigung an ebenen und im wesentlichen lotrecht ausgerichteten Flächen, insbesondere an Gebäudefassaden, welches mit zur Aufzucht und/oder Kultivierung von Pflanzen geeigneten Schüttgütern befüllbar ist und eine Rückwand, zwei Seitenwände und eine Vorderwand aufweist, wobei die Seitenwände endseitig an der Rückwand und der Vorderwand befestigt sind und zwischen der Rückwand und der Vorderwand eine Befüll- und Entnahmeöffnung angeordnet ist,
**dadurch gekennzeichnet,**
**dass** die Seitenwände (5) zwei geradlinig begrenzte Kanten (8) und eine zumindest annähernd kreisbogenabschnittförmig begrenzte, die beiden geradlinig begrenzten Kanten (8) verbindende dritte Kante (9) aufweist, wobei eine der geradlinig begrenzten Kanten (8) jeder Seitenwand (5) mit der Rückwand (4) und die zumindest annähernd kreisbogenabschnittförmig begrenzte Kante (9) jeder Seitenwand (5) mit der Vorderwand (6) verbunden ist.

2. Gefäß nach Anspruch 1,
**dadurch gekennzeichnet,**
**dass** die Vorderwand (6) kreisbogenabschnittförmig ausgebildet ist und insbesondere im Querschnitt einen Viertelkreis beschreibt..

3. Gefäß nach Anspruch 1,
**dadurch gekennzeichnet,**
**dass** außenseitig an der Rückwand (4) Distanzhalter (12) angeordnet sind, in deren Bereich vorzugsweise Befestigungselemente (22, 23; 28) zur Befestigung an der Fassade angeordnet werden können.

4. Gefäß nach Anspruch 3,
**dadurch gekennzeichnet,**
**dass** die Rückwand (4) an ihrem oberen Ende eine die Distanzhalter (12) überdeckende, sich über die gesamte Länge der Rückwand (4) erstreckende Dichtkante (10) und an ihrem unteren Ende eine Tropfkante (11) aufweist.

5. Gefäß nach Anspruch 1,
**dadurch gekennzeichnet,**
**dass** die Rückwand (4), die Vorderwand (6) und/oder die Seitenwände (5) aus Metall, insbesondere korrosionsbeständigem Stahl oder aus Leichtmetall, wie Aluminium oder aus Kunststoff bestehen.

6. Gefäß nach Anspruch 1,
**gekennzeichnet durch**
ein, vorzugsweise mehrere, zumindest zwei Behälter (15), die zwischen Vorderwand (6) und Rückwand (4) ausgebildet sind und der Bevorratung von Wasser und/oder Nährstoffen dienen.

7. Gefäß nach Anspruch 1,
**dadurch gekennzeichnet,**
**dass** zwischen Vorderwand (6) und Rückwand (4) eine Kammer (17) mit einem Filtermedium (19), beispielsweise Kies angeordnet ist .

8. Gefäß nach Anspruch 6,
**dadurch gekennzeichnet,**
**dass** die Behälter (15) im Bereich der Vorderwand (6) und/oder der Rückwand (4) angeordnet sind.

9. Gefäß nach Anspruch 1,
**dadurch gekennzeichnet,**
**dass** zumindest ein Abfluss (18) vorgesehen ist, über den überschüssiges Wasser insbesondere in eine Fallrohr abführbar ist.

10. Gefäß nach Anspruch 1,
**dadurch gekennzeichnet,**
**dass** die beiden geradlinig begrenzten Kanten (8) der Seitenwände (5) eine übereinstimmende Länge aufweisen.
